# EUROPÄISCHE PATENTANMELDUNG

(11) **EP 1 339 148 A1**
(43) Veröffentlichungstag der Anmeldung: **27.08.2003**
(21) Anmeldenummer: 03003424.3
(22) Anmeldetag: 14.02.2003
(51) Int. Cl.: H02G 3/04, B60R 16/02, B05B 15/04

(54) **Kabelbaum**

(30) Priorität: 21.02.2002 DE 20202734 U
(71) Anmelder: era-contact GmbH, 75015 Bretten (DE)
(72) Erfinder: Aichele, Erich, 71083 Herrenberg (DE); Hamjediers, Olaf, 76327 Pfinztal-Berghausen (DE); Moskob, Frank, 76131 Karlsruhe (DE)
(74) Vertreter: Schaumburg, Thoenes & Thurn

(57) **Zusammenfassung**

Bei einem Kabelbaum, der auf mindestens einem Teil seiner Länge von einer lösbaren Schutzhülle (6) umgeben ist, wird die Schutzhülle von einem schrumpffähigen Kunststoffschlauch (26) gebildet, der einen gegenüber dem Kabelbaum (10) größeren Durchmesser hat und mindestens an den Schlauchenden auf den Kabelbaum flüssigkeitsdicht aufgeschrumpft ist.

## Beschreibung

Die Erfindung betrifft einen Kabelbaum, der auf mindestens einem Teil seiner Länge von einer lösbaren Schutzhülle umgeben ist.

An Maschinen, z. B. Verbrennungsmotoren, die erst nach einem Probelauf lackiert werden sollen, müssen nicht zu lackierende Teile, die nach einem erfolgreichen Probelauf nicht mehr demontiert werden dürfen, abgedeckt oder maskiert werden. Zu diesen Teilen gehören auch Kabelbäume, die häufig von Kunststoffwellrohren umhüllt sind.

Derzeit werden die Kabelbäume, die zum Teil an sehr schwer zugänglichen Stellen liegen, im eingebauten Zustand unmittelbar vor dem Lackieren in einem umständlichen und zeitaufwendigen Prozeß mit Klebeband komplett umwickelt. Die Verwendung eines Klebebandes ist wegen der Verunreinigung durch Klebebandreste aufgrund der Wärmeeinwirkung beim Probelauf und aufgrund der Alterung bei der bis zu zweijährigen Zwischenlagerung der Kabelbäume zu einem früheren Zeitpunkt nicht möglich. Zudem besteht bei diesem Verfahren ein höheres Risiko, daß die Abdeckung nicht flüssigkeitsdicht ist und somit Lackspuren auf den Wellrohren auftreten.

Ein weiteres Verfahren besteht darin, Hüllen oder Mäntel aus Pappe zu verwenden, die mittels eines integrierten Reißbandes aufgerissen und entfernt werden können.

Diese Technik ist jedoch wegen der offenen Enden dieser Hüllen oder Mäntel unzureichend. Zudem werden die Pappmäntel bei der Hochdruckreinigung der zu lackierenden Maschinen vor dem Lackieren beschädigt oder zerstört.

Der Erfindung liegt die Aufgabe zugrunde, einen Kabelbaum mit einer Schutzhülle anzugeben, die auf einfache Weise angebracht und entfernt werden kann und die den umhüllten Abschnitt des Kabelbaumes gegenüber einem Kontakt mit Reinigungsmedium oder Farbe wirksam schützt.

Diese Aufgabe wird erfindungsgemäß dadurch gelöst, daß die Schutzhülle von einem schrumpffähigen Kunststoffschlauch gebildet ist, der einen gegenüber dem Kabelbaum größeren Durchmesser hat und mindestens an den Schlauchenden auf den Außenumfang des Kabelbaums flüssigkeitsdicht aufgeschrumpft ist.

Häufig sind die Kabel des Kabelbaumes von einem Wellrohr umgeben. Dieses wird von dem Schrumpfschlauch eingehüllt, wobei sich das Material des Schrumpfschlauches an den geschrumpften Schlauchenden in die Windungen des Wellrohres legt und damit eine zuverlässige Abdichtung des Schlauchinnenraumes gewährleistet.

Vorzugsweise besteht der Schrumpfschlauch aus einem reißfähigen Material, so daß der Schlauch nach dem Abschluß der Reinigungs- und Lackierarbeiten mit einem Messer oder einer Schere angestochen und dann aufgerissen werden kann.

Vorzugsweise besteht der Schrumpfschlauch aus einem transparenten Material, so daß eventuell angebrachte Bezeichnungstüllen auch von dem Schlauchmaterial umhüllt werden können und dennoch sichtbar bleiben.

Bei einer bevorzugten Ausführungsform ist die Außenoberfläche des Schrumpfschlauches aufgerauht, um eine bessere Lackhaftung zu erreichen. Dies ist erforderlich, um beim Abreißen des Schlauches nach dem Lackiervorgang das Absplittern von Lackteilen von dem Schlauch zu vermeiden. Schläuche werden in der Regel entfernt, wenn der Lack an der lackierten Maschine noch nicht ganz trocken ist. Von dem Schlauch abplatzende Lackpartikel könnten dann an den frisch lackierten Flächen haften bleiben und die Güte der Lackierung beeinträchtigen.

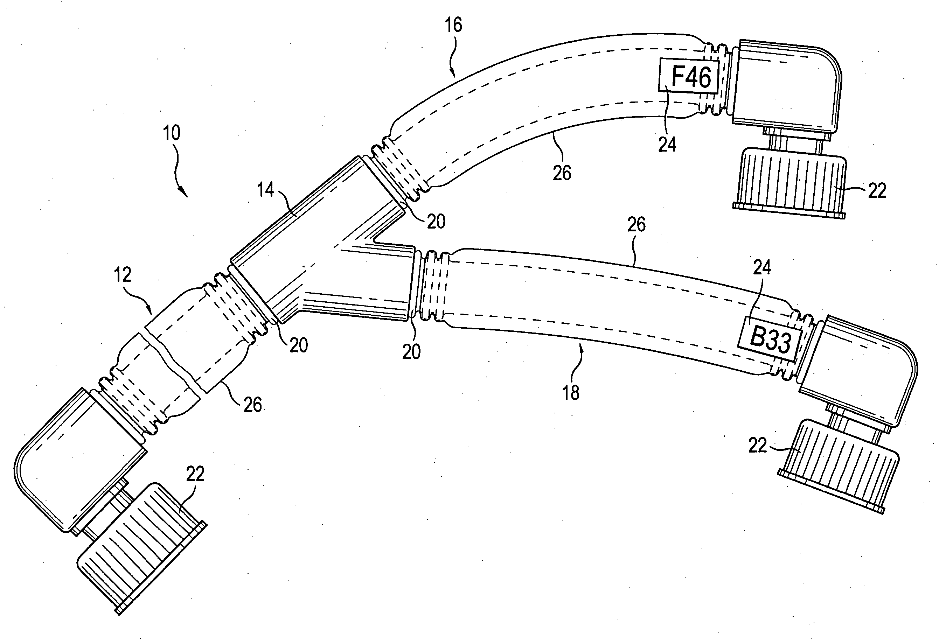

Die folgende Beschreibung erläutert in Verbindung mit der beigefügten Zeichnung die Erfindung anhand eines Ausführungsbeispiels. Die einzige Figur zeigt einen Teil eines Kabelbaums mit aufgschrumpften Schutzhüllen.

In der Figur erkennt man einen allgemein mit 10 bezeichneten Kabelbaum mit einem ersten Abschnitt 12, der sich an einem Verzweigungsstück 14 in zwei weitere Abschnitte 16 und 18 aufteilt. Die Abschnitte 12, 16 und 18 umfassen jeweils ein aus Kunststoff bestehendes Wellrohr 20, in dem die nicht dargestellten Kabel verlaufen, die an den Enden der Abschnitte 12, 16 und 18 mit Anschlußstücken 22 verbunden sind. Nahe den Anschlußstücken 22 sind an den Kabelbaumabschnitten 16 und 18 Bezeichnungstüllen 24 befestigt, welche die Kabelbaumabschnitte 16 und 18 kennzeichnen.

Die Kabelbaumabschnitte 12, 16 und 18 sind auf dem größten Teil ihrer Länge von einem transparenten Schrumpfschlauch 26 umgeben, der einen gegenüber dem Wellrohr 20 größeren Durchmesser hat, so daß er bequem über das Wellrohr 20 einschließlich der Bezeichnungstüllen 24 geschoben werden kann, wobei letztere aufgrund der Transparenz des Schrumpfschlauches 26 sichtbar bleiben. An seinen Enden wird der Schrumpfschlauch 26 auf den Außenmantel des Wellrohres 20 aufgeschrumpft, wobei sich das Material des Schrumpfschlauches 26 in die Windungen des Wellrohres 20 einlegt und so das Schlauchinnere flüssigkeitsdicht abschließt.

Bei der Konfektionierung des Kabelbaumes 10 werden die Schläuche über die zugeschnittenen und mit Bezeichnungstüllen versehenen Wellrohre geschoben und aufgeschrumpft. Nach dem Einführen der Kabel und dem Anbringen der Anschlußstücke 22 wird der Kabelbaum an die Maschine angeschlossen, so daß Probeläufe mit der Maschine durchgeführt werden können. Danach dürfen die Kabel in der Regel nicht mehr von der Maschine getrennt werden, da diese in dem Zustand, in dem sie den Probelauf absolviert hat, verbleiben soll. Die Maschine wird anschließend mit Hochdruck gereinigt, und es werden die Anschlußstücke abgeklebt. Danach wird die Maschine lackiert, und es werden die Abdeckungen wieder entfernt. Hierzu werden die Schrumpfschläuche in der oben beschriebenen Weise aufgerissen, so daß sie entfernt werden können.

Der Schutz der Kabelbaumabschnitte durch die erfindungsgemäß vorgesehenen Schrumpfschläuche ist nicht nur sicherer sondern auch kostengünstiger sowie weniger zeit- und arbeitsintensiv als die bisherigen Lösungen. Dadurch, daß der Schrumpfschlauch nach dem Zuschnitt des Wellrohres übergeschoben werden kann und ohne Rücksicht auf die Dichtigkeit relativ groß dimensioniert werden kann, ist die Handhabung des Schrumpfschlauches äußerst einfach. Bei geeigneter Wahl des Schrumpfschlauchmaterials kann dieser auch wieder leicht entfernt werden. Die Bezeichnungstüllen des Kabelbaumabschnittes sind geschützt und dennoch lesbar. Das Schrumpfschlauchmaterial ist langlebiger als ein Klebeband und hinterläßt keine Spuren an dem zu schützenden Kabelbaumabschnitt. Beim Entfernen des Schrumpfschlauches kann keine Beschädigung des noch feuchten Lackes der Maschine durch Lacksplitter oder Restwasser in der Hülle auftreten. Ein geeignetes Material für den Schrumpfschlauch ist beispielsweise ein Polyolefin, das von der Firma Raychem unter der Bezeichnung LSTT vertrieben wird.

## Patentansprüche

1. Kabelbaum, der auf mindestens einem Teil seiner Länge von einer lösbaren Schutzhülle (6) umgeben ist, **dadurch gekennzeichnet, daß** die Schutzhülle von einem schrumpffähigen Kunststoffschlauch (26) gebildet ist, der einen gegenüber dem Kabelbaum (10) größeren Durchmesser hat und mindestens an den Schlauchenden auf den Kabelbaum flüssigkeitsdicht aufgeschrumpft ist.

2. Kabelbaum nach Anspruch 1, **dadurch gekennzeichnet, daß** die Kabel des Kabelbaumes von einem Wellrohr (20) umgeben sind und daß das Wellrohr (20) von dem Schrumpfschlauch (26) eingehüllt ist.

3. Kabelbaum nach Anspruch 1 oder 2, **dadurch gekennzeichnet, daß** der Schrumpfschlauch (26) aus einem transparenten Material besteht.

4. Kabelbaum nach einem der Ansprüche 1 bis 3, **dadurch gekennzeichnet, daß** die Außenoberfläche des Schrumpfschlauches (26) aufgerauht ist.

5. Kabelbaum nach einem der Ansprüche 1 bis 4, **dadurch gekennzeichnet, daß** der Schrumpfschlauch (26) aus einem reißfähigen Material besteht.
